# EUROPEAN PATENT APPLICATION

(11) **EP 4 344 560 A1**
(43) Date of publication of application: **03.04.2024**
(21) Application number: 23199055.7
(22) Date of filing: 22.09.2023
(51) Int. Cl.: A24F 40/40, H01M 50/202, H01M 50/247, H01M 50/262, H05K 5/02

(54) **BATTERY ASSEMBLY AND ELECTRONIC ATOMIZATION DEVICE**

(30) Priority: 30.09.2022 CN 202211213926
(71) Applicant: Shenzhen Smoore Technology Limited, Shenzhen, Guangdong 518102 (CN)
(72) Inventor: ZOU, Shuping, Shenzhen, 518102 (CN); LI, Guanghui, Shenzhen, 518102 (CN)
(74) Representative: Corradini, Corrado

(57) **Abstract**

The invention relates to a battery assembly 100 and an electronic atomization device 10 that can be easily disassembled and recycled. The battery assembly includes a battery cell 120, a housing 111, and a mounting bracket 112. The battery cell is provided on the mounting bracket, and the mounting bracket is accommodated in an accommodating cavity 113 of the housing. An inner wall of the housing is provided with a first engaging structure 114, and the outer wall of the housing is provided with a disassembly hole 116 in communication with the accommodating cavity. The mounting bracket is provided with a second engaging structure 115, and the mounting bracket extends in the accommodating cavity, so that the first engaging structure is engaged with the second engaging structure.

## Description

### TECHNICAL FIELD

The present invention relates to the technical field of assembly structures, in particular to a battery assembly and an electronic atomization device.

### BACKGROUND

An electronic atomization device generally includes an atomization assembly and a battery assembly, the battery assembly provides electric energy for the atomization assembly, and the atomization assembly is configured to atomize an atomization medium into an aerosol. However, the battery assembly of the conventional electronic atomization device is generally a non-detachable structure, which leads to a cell in the battery assembly being not replaceable, which is not conducive to the recycling of the battery assembly.

### SUMMARY

Accordingly, it is necessary to provide a battery assembly and an electronic atomization device that can be easily disassembled and recycled to address the above problem.

A battery assembly includes: a housing provided with an accommodating cavity, a mounting bracket provided with a second engaging structure, and a battery cell mounted on the mounting bracket. The inner wall of the housing is provided with a first engaging structure, and the outer wall of the housing is provided with a disassembly hole in communication with the accommodating cavity. The second engaging structure is configured to be engaged with the first engaging structure. The battery cell is accommodated in the accommodating cavity. The disassembly hole faces an engagement position the first engaging structure or the second engaging structure, and at least one of the first engaging structure and the second engaging structure is resiliently deformable to be disengaged from each other.

In one of the embodiments, the first engaging structure includes a first connecting portion and a first hook connected to the first connecting portion, the first connecting portion is connected to the inner wall of the housing, the second engaging structure includes a second connecting portion and a second hook connected to the second connecting portion, the second hook is configured to be engaged with the first hook, and at least one of the first connecting portion and the second connecting portion is resiliently deformable.

In one of the embodiments, the second connecting portion is integrally formed on the mounting bracket.

In one of the embodiments, the extension direction of the first engaging structure is parallel to the axial direction of the housing, and the extension direction of the second engaging structure is parallel to the axial direction of the housing.

In one of the embodiments, the housing includes a shell sleeve and a base, the first engaging structure is provided on the shell sleeve or the base, and the base is detachable with respect to the shell sleeve.

In one of the embodiments, the housing includes a first end and a second end opposite to the first end, and the mounting bracket and the battery cell are capable of being pushed out from the first end or the second end.

In the battery assembly, the battery cell is mounted on the mounting bracket, and the mounting bracket provided with the battery cell is provided in the accommodating cavity. Since the inner wall of the housing is provided with the first engaging structure, the mounting bracket is provided with the second engaging structure, and the mounting bracket is inserted into the accommodating cavity, so that the first engaging structure is engaged with the second engaging structure to achieve the assembly of the battery assembly. The stability of the mounting bracket in the accommodating cavity can be ensured by the first engaging structure and the second engaging structure. Since the first engaging structure is engaged with the second engaging structure in the accommodating cavity, by aligning the disassembly hole provided on the outer wall of the housing at the engagement position, the disassembly tool can be easily inserted through the disassembly hole to the engagement position of the first engaging structure and the second engaging structure, and then the resiliently deformable first engaging structure and/or the second engaging structure can be pull or pressed, so that the first engaging structure can be disengaged from the second engaging structure, so that the mounting bracket can be effectively removed from the accommodating cavity, which facilitates the replacement of the battery cell or the recycling of the battery assembly.

An electronic atomization device includes the aforementioned battery assembly and an atomization assembly accommodated on the housing, and the battery cell is configured to supply power to the atomization assembly.

In one of the embodiments, the atomization assembly includes a heating element and a carrier, the carrier defines an atomization cavity, the heating element is accommodated in the atomization cavity, the carrier is provided on the housing and is detachably connected to the mounting bracket, and the heating element is electrically connected to the battery cell.

In one of the embodiments, the carrier is provided with a first matching structure, the mounting bracket is provided with a second matching structure, an end of the housing is provided with a mounting opening in communication with the accommodating cavity, an end of the carrier extends into the accommodating cavity through the mounting opening to enable the first matching structure to be detachably connected to the second matching structure.

In one of the embodiments, the first engaging structure is provided on the bottom wall of the housing opposite to the mounting opening or on the side wall of the housing adjacent to the bottom wall, the disassembly hole is provided on the bottom wall of the housing or on the side wall of the housing adjacent to the bottom wall, and the second engaging structure is provided on the bottom wall or the side wall of the mounting bracket away from the carrier.

In one of the embodiments, the extension direction of the first engaging structure coincides with the axial direction of the mounting opening, the extension direction of the second engaging structure relative to the mounting bracket coincides with the axial direction of the mounting opening. In one of the embodiments, the housing includes a shell sleeve and a base, opposite ends of the shell sleeve are provided with the mounting opening and an assembly opening respectively, and the base covered on the assembly opening. The first engaging structure is provided on the base, the disassembly hole is provided on the base, and the second engaging structure is provided on a side of the mounting bracket away from the carrier.

In one of the embodiments, a first limiting platform is formed on the outer wall of the carrier, and the end surface of the shell sleeve forming the mounting opening can abut against the first limiting platform. A second limiting platform is formed on the outer wall of the base, and the end surface of the shell sleeve forming the assembly opening abuts against the second limiting platform.

### BRIEF DESCRIPTION OF THE DRAWINGS

The drawings constitute a part of the present disclosure and are used to provide a further understanding of the present disclosure. The exemplary embodiments of the present disclosure and their descriptions are used to explain the present disclosure and do not constitute an improper limitation of the present disclosure.

In order to illustrate the embodiments of the present disclosure more clearly, the drawings used in the embodiments will be described briefly. Apparently, the following described drawings are merely for the embodiments of the present disclosure, and other drawings can be derived by those of ordinary skill in the art without any creative effort.

In addition, the drawings are not drawn on a 1:1 scale, and the relative sizes of the various elements are drawn in the drawings only as examples and not necessarily to true scale.
FIG. 1 is a cross-sectional view of an electronic atomization device according to an embodiment.
FIG. 2 is an exploded view of the electronic atomization device shown in FIG. 1.
FIG. 3 is a partial enlarged view of the electronic atomization device of FIG. 1.
FIG. 4 is a perspective view of a mounting bracket in FIG. 2.
FIG. 5 is a perspective view of a base in FIG. 2.
FIG. 6 is a cross-sectional view of an electronic atomization device according to another embodiment.
FIG. 7 is an exploded view of the electronic atomization device shown in FIG. 6.
FIG. 8 is a partial enlarged view of the electronic atomization device of FIG. 6.
FIG. 9 is a schematic structural view of a housing in FIG. 7.
FIG. 10 is a partial cross-sectional view of the housing in FIG. 9.

### Reference numbers:

10, electronic atomization device; 100, battery assembly; 110, mounting assembly; 111, housing; 1112, shell sleeve; 1114, base; 1116, second limiting platform; 112, mounting bracket; 1121, first mounting portion; 1116, second mounting portion; 1123, second matching structure; 113, accommodating cavity; 114, first engaging structure; 1141, first connecting portion; 1142, first hook; 1151, second connecting portion; 1152, second hook; 116, disassembly hole; 117, mounting opening; 118, connecting rib; 120, battery cell; 130, controller; 200, atomization assembly; 210, heating element; 220, carrier; 221, first matching structure; 222, first limiting platform; 230, inhaling nozzle; 232, inhaling channel.

### DETAILED DESCRIPTION OF THE EMBODIMENTS

In order to make the above objects, features and advantages of the present application more obvious and easier to understand, the specific embodiments of the present application are described in detail below in combination with the accompanying drawings. Many specific details are set forth in the following description to facilitate a full understanding of the invention. However, the present application can be implemented in many ways different from those described herein, and those skilled in the art can make similar improvements without violating the connotation of the invention. Therefore, the invention is not limited by the specific embodiments disclosed below. In the description of the present application, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential direction" are based on the azimuth or position relationship shown in the attached drawings, which is only for the convenience of describing the present application and simplifying the description, rather than indicating or implying that the device or element must have a specific azimuth, be constructed and operated in a specific azimuth, so it cannot be understood as a limitation of the present application.

In addition, the terms "first" and "second" are only used for descriptive purposes and cannot be understood as indicating or implying relative importance or implicitly indicating the number of indicated technical features. Thus, the features defined with "first" and "second" may explicitly or implicitly include at least one of the features. In the description of the present application, "multiple" means at least two, such as two, three, etc., unless otherwise expressly and specifically defined.

In the present invention, unless otherwise expressly specified and limited, the terms "mount", "connect", "contact", "fix" and other terms should be understood in a broad sense, for example, they can be fixed connections, removable connections, or integrated. It can be mechanical connection or electrical connection. It can be directly connected or indirectly connected through an intermediate medium. It can be the connection within two elements or the interaction relationship between two elements, unless otherwise expressly limited. For those skilled in the art, the specific meaning of the above terms in the present application can be understood according to the specific situation.

In the present invention, unless otherwise expressly specified and limited, the first feature "above" or "below" the second feature may be in direct contact with the first and second features, or the first and second features may be in indirect contact through an intermediate medium. Moreover, the first feature is "above" the second feature, but the first feature is directly above or diagonally above the second feature, or it only means that the horizontal height of the first feature is higher than the second feature. The first feature is "below" of the second feature, which can mean that the first feature is directly below or obliquely below the second feature, or simply that the horizontal height of the first feature is less than that of the second feature.

It should be noted that when an element is called "fixed to" or "provided on" another element, it can be directly on another element or there can be a centered element. When an element is considered to be "connected" to another element, it can be directly connected to another element or there may be intermediate elements at the same time. The terms "vertical", "horizontal", "up", "down", "left", "right" and similar expressions used herein are for the purpose of illustration only and do not represent the only embodiment.

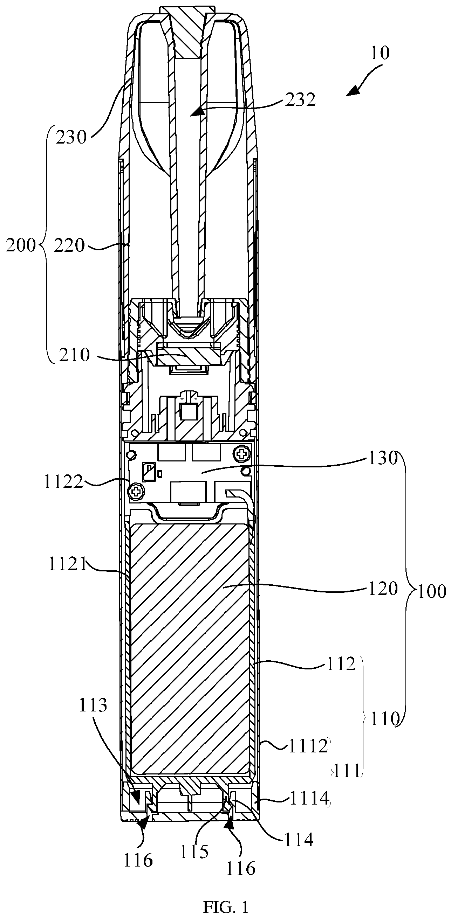

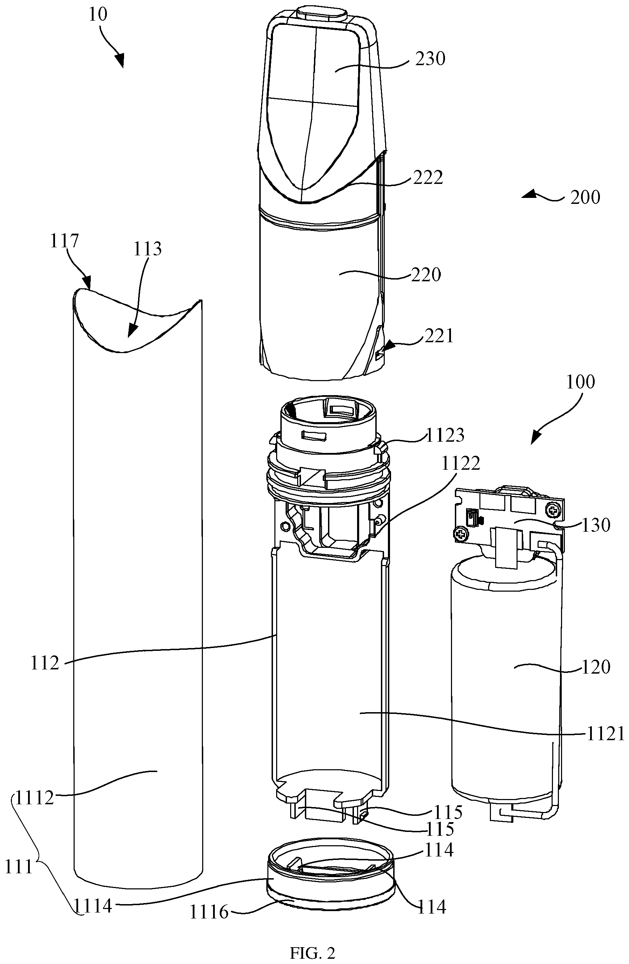

Referring to FIG. 1 and FIG. 2, according to an embodiment of the present invention, an electronic atomization device 10 is configured to atomize an atomization medium. The electronic atomization device 10 can be disassembled to facilitate replacement, maintenance or recycling.

Specifically, the electronic atomization device 10 includes a battery assembly 100 and an atomization assembly 200 connected to the battery assembly 100. The battery assembly 100 is configured to provide power for the atomization assembly 200, so that the atomization assembly 200 can atomize the atomization medium to be atomized to generate aerosol.

In the embodiment, the battery assembly 100 includes a mounting assembly 110 and a battery cell 120 mounted on the mounting assembly 110. The mounting assembly 110 is configured to provide support for the mounting of the battery cell 120. Specifically, the atomization assembly 200 is provided on the mounting assembly 110, and the battery cell 120 is configured to supply power for the atomization assembly 200.

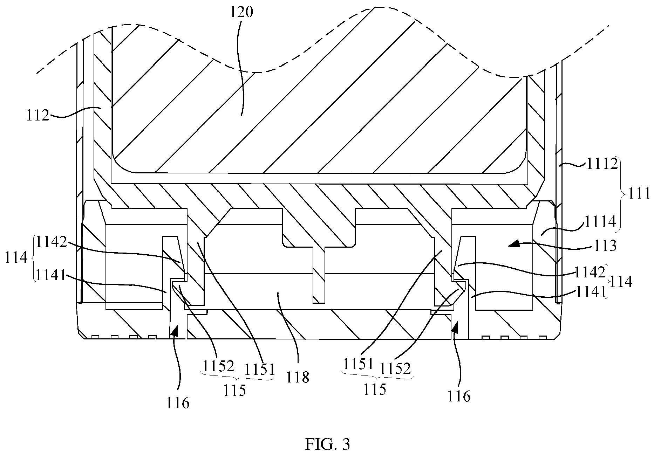

Referring to FIGS. 3 to 5, in an embodiment, the mounting assembly 110 includes a housing 111 and a mounting bracket 112. The housing 111 is provided with an accommodating cavity 113, and the inner wall of the housing 111 is provided with a first engaging structure 114. The mounting bracket 112 is provided with a second engaging structure 115. The battery cell 120 is mounted on the mounting bracket 112 and received in the accommodating cavity 113. The second engaging structure 115 can be engaged with the first engaging structure 114. The outer wall of the housing 111 is provided with a disassembly hole 116 in communication with the accommodating cavity 113. The disassembly hole 116 faces the first engaging structure 114 or the second engaging structure 115. Specifically, the disassembly hole 116 faces the engagement position of the first engaging structure 114 and the second engaging structure 115. At least one of the first engaging structure 114 and the second engagement structure 115 may be resiliently deformable, so that the first engaging structure 114 can be disengaged from the second engaging structure 115.

In the battery assembly 100, the battery cell 120 is mounted on the mounting bracket 112, and the mounting bracket 112 provided with the battery cell 120 is provided in the accommodating cavity 113. Since the inner wall of the housing 111 is provided with the first engaging structure 114, the mounting bracket 112 is provided with the second engaging structure 115, and the mounting bracket 112 is inserted into the accommodating cavity 113, the first engaging structure 114 is engaged with the second engaging structure 115 to achieve the assembly of the battery assembly 100. The stability of the mounting bracket 112 in the accommodating cavity 113 can be ensured by the first engaging structure 114 and the second engaging structure 115. Since the first engaging structure 114 is engaged with the second engaging structure 115 in the accommodating cavity 113, by aligning the disassembly hole 116 provided on the outer wall of the housing 111 at the engagement position, the disassembly tool can be easily inserted through the disassembly hole 116 to the engagement position of the first engaging structure 114 and the second engaging structure 115, and then the resiliently deformable first engaging structure 114 and/or the second engaging structure 115 can be pulled or pressed, so that the first engaging structure 114 can be disengaged from the second engaging structure 115, and the mounting bracket 112 can be effectively removed from the accommodating cavity 113, which facilitates the replacement of the battery cell 120 or the recycling of the battery assembly 100.

For example, in the embodiment, the second engaging structure 115 provided on the mounting bracket 112 may be resiliently deformable, and the second engaging structure 115 is resiliently deformed by pulling the second engaging structure 115 through the disassembly hole 116 through a simple removal tool such as tweezers, iron sheet, etc., so that the second engaging structure 115 can be disengaged from the first engaging structure 114, that is, the mounting bracket 112 can be disassembled from the housing 111, which facilitates the recovery of the battery cell 120 and the mounting assembly 110.

In an embodiment, the first engaging structure 114 includes a first connecting portion 1141 and a first hook 1142 provided on the first connecting portion 1141, and the first connecting portion 1141 is connected to the inner wall of the housing 111. The first hook 1142 can be engaged with the second engaging structure 115. Optionally, the first connecting portion 1141 may be resiliently deformable, and then the first hook 1142 is pulled through the disassembly hole 116, so that the first connecting portion 1141 is bent and deformed, and the first hook 1142 is away from the second engaging structure 115 to achieve the purpose of releasing engagement. When a force applied to the first hook 1142 is removed, the first connecting portion 1141 can be reset, which is convenient for subsequent mounting and engagement again.

As shown in FIG. 3, in an embodiment, the first engaging structure 114 is formed by an extension of the inner wall of the housing 111, and the extension direction of the first engaging structure 114 is the axial direction of the housing 111. Specifically, the extension direction of the first connecting portion 1141 relative to the housing 111 is the axial direction of the housing 111. It should be understood that the axial direction of the housing 111 is the vertical direction shown in FIG. 3.

In other embodiments, the extension direction of the first engaging structure 114 relative to the housing 111 may also intersect with the axial direction of the housing 111. Specifically, the extension direction of the first connecting portion 1141 relative to the housing 111 may also intersect with the axial direction of the housing 111.

In an embodiment, the second engaging structure 115 includes a second connecting portion 1151 and a second hook 1152 provided on the second connecting portion 1151. Specifically, the second hook 1152 can be engaged with the first engaging structure 114. Optionally, the second connecting portion 1151 may be resiliently deformable, and then the second hook 1152 is pulled through the disassembly hole 116, so that the second connecting portion 1151 is bent and deformed, thereby disengaging the second hook 1152 from the first engaging structure 114. When a force applied to the second hook 1152 is removed, the second connecting portion 1151 can be reset, which is convenient for subsequent mounting and engagement again.

In the embodiment, the second hook 1152 is engaged with the first hook 1142, and the first connecting portion 1141 and/or the second connecting portion 1151 is resiliently deformable. Pulling the deformable first connecting portion 1141 and/or the second connecting portion 1151 through the disassembly hole 116 can release the engagement of the first hook 1142 and the second hook 1152.

As shown in FIG. 3, in an embodiment, the second engaging structure 115 is formed by an extension of the outer wall of the mounting bracket 112, and the extension direction of the second engaging structure 115 is the axis direction of the housing 111. Specifically, the extension direction of the second connecting portion 1151 relative to the mounting bracket 112 is the axial direction of the housing 111.

Of course, in other embodiments, the extension direction of the second engaging structure 115 relative to the mounting bracket 112 may also intersect with the axial direction of the housing 111. Specifically, the extension direction of the second connecting portion 1151 relative to the mounting bracket 112 may also intersect with the axial direction of the housing 111.

Referring to FIG. 3, in the embodiment, the extension direction of the first engaging structure 114 is the same as that of the second engaging structure 115. Specifically, the extension direction of the first connecting portion 1141 is the same as that of the second connecting portion 1151. Taking the first engaging structure 114 on the right and the second engaging structure 115 on the right as an example, the first hook 1142 is provided on the left side of the first connecting portion 1141, and the second hook 1152 of the second engaging structure 115 on the right is provided on the right side of the second connecting portion 1151. In the case that the first engaging structure 114 is resiliently deformable, when a rightward force is applied to the first engaging structure 114, the engagement can be released. In the case that the second engaging structure 115 may be resiliently deformable, when a leftward force is applied to the second engaging structure 115, the engagement can be released.

In other embodiments, the extension directions of the first engaging structure 114 and the second engaging structure 115 may also be different. For example, the extension direction of the first engaging structure 114 is the axial direction of the housing 111, and the extension direction of the second engaging structure 115 may also intersect with the axial direction of the housing 111, so that the hook 1152 of the second engaging structure 115 hooks on the second hook 1142 of the first engaging structure 114 to limit the mounting bracket 112 in the accommodating cavity 113.

When the extension direction and the angle direction of the first engaging structure 114 are different, the second engaging structure 115 and the disassembly hole 116 are provided correspondingly, so that the first engaging structure 114 and the second engaging structure 115 fit closely. In an embodiment, the first engaging structure 114 may be provided on the bottom wall or the side wall of the housing 111, and is formed by the extension of the bottom wall or the side wall of the housing 111. The extension direction and the extension angle of the second engaging structure 115 may change correspondingly with the first engaging structure 114.

In another embodiment, the extension direction of the first engaging structure 114 and the extension direction of the second engaging structure 115 can also be other directions, which will not be described herein, as long as the first engaging structure 114 can be engaged with the second engaging structure 115, and the engagement can be released by pulling or pressing the first engaging structure 114 and/or the second engaging structure 115.

In an embodiment, the number of the first engaging structures 114 is at least two, the number of the second engaging structure 115 and the number of the disassembly hole 116 are the same as the number of the first engaging structure 114. Each second engaging structure 115 can be correspondingly mounted on one first engaging structure 114, and each disassembly hole 116 is aligned at the engagement position of one first engaging structure 114 and the corresponding second engaging structure 115. By providing at least two first engaging structures 114 to be engaged with at least two the second engaging structures 115, the stability of the connection between the mounting bracket 112 and the housing 111 can be improved. In addition, each of the first engaging structure 114 and the second engaging structure 115 can be disassembled through the corresponding disassembly hole 116.

In other embodiments, two or more pairs of the first engaging structures 114 and the second engaging structures 115 can be disassembled through one disassembly hole 116, and the disassembly tool can be inserted into different engagement positions of the first engaging structures 114 and the second engaging structures 115 through one dismounting hole 116, so as to reduce the number of disassembling holes 116 opened in the housing 111.

In the embodiment, two first engaging structures 114 are spaced apart from each other, two second engaging structures 115 are arranged opposite to each other, and the two second engaging structures 115 are correspondingly engaged with the two first engaging structures 114. Specifically, two disassembly holes 116 are provided, and the two disassembly holes 116 are respectively aligned at the engagement positions of the two first engaging structures 114 and the second engaging structures 115.

In an embodiment, the first engaging structure 114 is integrally formed on the inner wall of the housing 111, which can ensure the stability of the first engaging structure 114 on the housing 111and the stability of the connection between the first engaging structure 114 and the second engaging structure 115. Specifically, one end of the first connecting portion 1141 is integrally formed on the housing 111, and the first hook 1142 is formed on the other end of the first connecting portion 1141. In other embodiments, the first engaging structure 114 may also be fixed on the inner wall of the housing 111 by welding, gluing, etc.

In an embodiment, the second engaging structure 115 is integrally formed on the mounting bracket 112, which can ensure the stability of the second engaging structure 115 on the mounting bracket 112 and the stability of the connection between the second engaging structure 115 and the first engaging structure. 114 connection stability. Specifically, one end of the second connecting portion 1151 is integrally formed on the mounting bracket 112, and the second hook 1152 is formed on the other end of the second connecting portion 1151. In other embodiments, the second engaging structure 115 may also be fixed on the mounting bracket 112 by welding, gluing, etc.

In an embodiment, an end of the housing 111 is provided with a mounting opening 117 in communication with the accommodating cavity 113. The first engaging structure 114 is provided on the bottom wall of the housing 111 opposite to the mounting opening 117 or on the side wall adjacent to the bottom wall of the housing 111, and the disassembly hole 116 is provided on the bottom wall of the housing 111 or on the side wall adjacent to the bottom wall of the housing 111. Specifically, the second engaging structure 115 is provided on the bottom wall of the mounting bracket 112 or the side wall adjacent to the bottom wall of the mounting bracket 112.

After the mounting bracket 112 is inserted into the accommodating cavity 113 through the mounting opening 117, it gradually extends toward the bottom wall of the housing 111. When the mounting bracket 112 gradually extends to a position adjacent to the bottom wall of the housing 111, the first engaging structure 114 located at or adjacent to the bottom wall of the housing 111 is engaged with the second engaging structure 115, so that the mounting bracket 112 is stably provided in the accommodating cavity 113.

When the positions of the first engaging structures 114 on the housing 111 are different, the corresponding positions of the second engaging structures 115 and the positions of the disassembly holes 116 can also be changed accordingly, so that the first engaging structures 114 can be effectively engaged with the second engaging structure 115.

For example, in the embodiment, the first engaging structure 114 is provided on the bottom wall of the housing 111, and the second engaging structure 115 is provided on the bottom wall of the mounting bracket 112. When the mounting bracket 112 extends into the accommodating cavity 113, the second engaging structure 115 gradually approaches and is engaged with the first engaging structure 114 on the bottom wall of the housing 111. Specifically, the extension directions of the first engaging structure 114 and the second engaging structure 115 are the same as the axial direction of the mounting opening 117. As shown in FIG. 3, this engaging manner can effectively limit the movement of the mounting bracket 112 towards the mounting opening 117 and effectively ensure the stability of the mounting bracket 112. In the embodiment, the axial direction of the mounting opening 117 is the same as the axial direction of the housing 111.

In other embodiments, the extension direction of the first engaging structure 114 may also intersect with the axial direction of the mounting opening 117. The extension direction of the second engaging structure 115 may also intersect with the axial direction of the mounting opening 117. In an embodiment, the second engaging structure 115 is provided in the middle of the bottom portion of the mounting bracket 112. In this embodiment, two second engaging structures 115 are provided, and the two second engaging structures 115 are mirror symmetrical relative to the central axis of the housing 111. The number of first engaging structure 114 corresponds to the number of second engaging structure 115, so as to ensure the uniformity of the force acting on the mounting bracket 112 during engaging and the reliability of the mounting. In other embodiments, the number of the first engaging structures 114 can also be other numbers, the first engaging structures 114 are spaced surrounding the central axis of the housing 111, and the second engaging structures 115 are provided corresponding to the first engaging structures 114.

In another embodiment, the first engaging structure 114 may also be provided on the side wall of the housing 111 adjacent to the bottom wall of the housing 111, and the second engaging structure 115 is correspondingly provided on the side wall of the mounting bracket 112. The second engaging structure 115 can be engaged with the side of the first engaging structure 114 opposite to the mounting opening 117 to limit the movement of the mounting bracket 112 toward the mounting opening 117. In the embodiment, the extension direction of the first engaging structure 114 intersects with the extension direction of the second engaging structure 115 and the axial direction of the mounting opening 117.

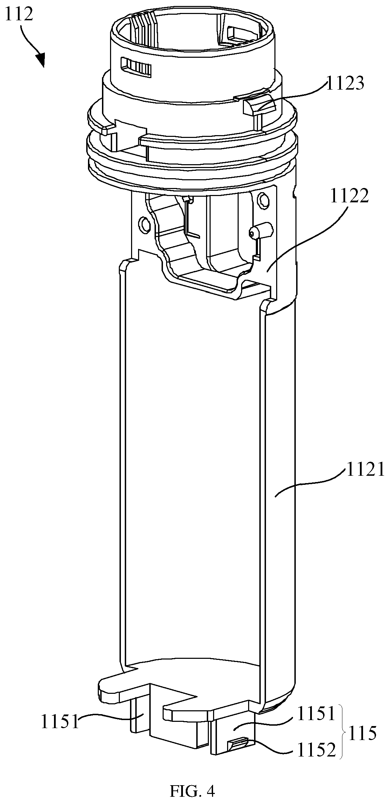

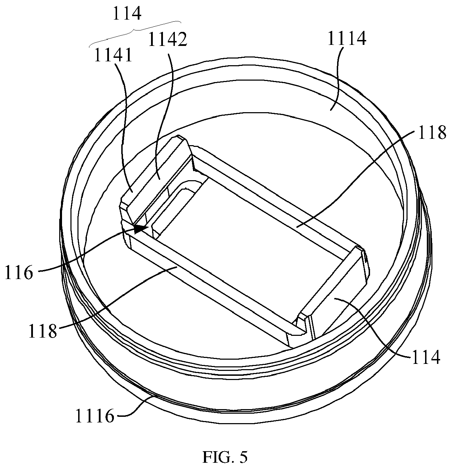

As shown in FIG. 4 and FIG. 5, in an embodiment, the second engaging structure 115 can be resiliently deformed. Two first engaging structures 114 are provided. The inner wall of the housing 111 is also provided with a connecting rib 118, and opposite sides of the connecting rib 118 are respectively connected to the two first engaging structures 114. Specifically, the opposite sides of the connecting ribs 118 are respectively connected to the first connecting portions 1141 of the two first engaging structures 114, which can ensure the stability of the first engaging structures 114, and further ensure the stability of the engagement of the first engaging structures 114 and the second engaging structure 115. Further, two connecting ribs 118 are provided, the two connecting ribs 118 are connected to opposite sides of the first connecting portion 1141, respectively, and the disassembly hole 116 is provided between the two connecting ribs 118. The stability of the first connecting portion 1141 can be further ensured by the two connecting ribs 118, thereby ensuring the reliability of the engagement of the first engaging structure 114 and the second engaging structure 115.

Referring to FIG. 1 to FIG. 3 again, in an embodiment, a first mounting portion 1121 is formed on the mounting bracket 112, and the battery cell 120 is detachably provided on the first mounting portion 1121. Specifically, the first mounting portion 1121 is shaped as a tank, and the battery cell 120 is mounted on the first mounting portion 1121 from a side of the first mounting portion 1121. After the mounting bracket 112 is disassembled relative to the housing 111, the battery cell 120 can be removed by the first mounting portion 1121.

In an embodiment, the battery assembly 100 further includes a controller 130. A second mounting portion 1122 located on a side of the first mounting portion 1121 is formed on the mounting bracket 112, and the controller 130 is detachably provided on the second mounting portion 1122 and is electrically connected to the battery cell 120. The second engaging structure 115 is provided on a portion of the first mounting portion 1121 away from the second mounting portion 1122. The atomization assembly 200 is electrically connected to the battery cell 120 through the controller 130, and the operation of the atomization assembly 200 can be controlled by the controller 130. The second mounting portion 1122 provides a mounting location for the controller 130, and the second mounting portion 1122 facilitates detachable connection of the controller 130. After the mounting bracket 112 is disassembled relative to the housing 111, the controller 130 can be removed through the second mounting portion 1122.

In the embodiment, the second engaging structure 115 is provided on the bottom wall of the mounting bracket 112 or at a position adjacent to the bottom wall of the mounting bracket 112, and the second mounting portion 1122 is located on the side of the first mounting portion 1121 opposite to the second engaging structure 115, so that the controller 130 on the second mounting portion 1122 is located closer to the mounting opening 117, which facilitates the connection of the atomization assembly 200 to the controller 130 and facilitates the control of the atomization assembly 200 by the controller 130.

Specifically, a positioning post and a mounting hole are formed on the second mounting part 1122, the controller 130 is positioned on the positioning post, and the controller 130 may be mounted on the second mounting portion 1122 by a screw detachably extended through the controller 130 and provided in the mounting hole.

In the embodiment, the battery cell 120 and the controller 130 are mounted on the same side of the mounting bracket 112. During the disassembly process, the battery cell 120 and the controller 130 can be disassembled simultaneously along one direction.

In an embodiment, the atomization assembly 200 includes a heating element 210 and a carrier 220. The carrier 220 defines an atomization cavity, the heating element 210 is provided in the atomization cavity. The carrier 220 is provided on the housing 111 and detachably connected to the mounting bracket 112, and the heating element 210 is electrically connected to the battery cell 120. The battery cell 120 supplies power to the heating element 210 to achieve the atomization of the atomization medium by the heating element 210. The carrier 220 supports the heating element 210, and the carrier 220 facilitates the detachable connection with the housing 111.

Specifically, the carrier 220 is provided with a first matching structure 221, and the mounting bracket 112 is provided with a second matching structure 1123. An end of the carrier 220 extends through the accommodating cavity 113 from the mounting opening 117, so that the first matching structure 221 is detachably connected to the second mating structure 1123. When an end of the carrier 220 provided with the first matching structure 221 extends through the accommodating cavity 113 from the mounting opening 117, the detachable connection between the first matching structure 221 and the second matching structure 1123 can be achieved. In the embodiment, the second matching structure 1123 is provided on the outer wall of the mounting bracket 112, and an end of the mounting bracket 112 provided with the second matching structure 1123 can extend through the carrier 220.

In the embodiment, the first matching structure 221 is a slot, the second matching structure 1123 is a buckle, and the buckle can be engaged in the slot. During disassembly, an external force is applied to enable the buckle to be disengaged from the slot. Specifically, the buckle is provided on the outer wall of the mounting bracket 112, and an end of the mounting bracket 112 provided with the buckle can be extended through the carrier 220, so that the buckle is engaged in the slot. In other embodiments, the first matching structure 221 and the second matching structure 1123 can also be threads, and the first matching structure 221 and the second matching structure 1123 are engaged together to achieve the detachable connection of the carrier 220 relative to the mounting bracket 112. Alternatively, the first matching structure 221 and the second matching structure 1123 may also be other structures capable of achieving detachable connection.

Referring to FIG. 1 to 3, in an embodiment, the housing 111 includes a shell sleeve 1112 and a base 1114, and the first engaging structure 114 is provided on the shell sleeve 1112 or the base 1114. After the first engaging structure 114 is disengaged from the second engaging structure 115, the base 1114 and the shell sleeve 1112 are detachable.

Specifically, the shell sleeve 1112 has a first end and a second end. After the first engaging structure 114 is disengaged from the second engaging structure 115, the mounting bracket 112 and the battery cell 120 can be pushed out from the first end or the second end.

In the embodiment, the first end of the shell sleeve 1112 is provided with the mounting opening 117, and the second end of the shell sleeve 1112 is provided with an assembly opening, and the base 1114 covers the assembly opening. The first engaging structure 114 is provided on the base 1114, the disassembly hole 116 is provided on the base 1114, and the second engaging structure 115 is provided on the side of the mounting bracket 112 away from the carrier 220. Specifically, the first engaging structure 114 is provided on the bottom wall or the side wall of the base 1114, and the disassembly hole 116 is opened on the bottom wall or the side wall of the base 1114. The second engaging structure 115 is provided on the bottom wall or the side wall of the mounting bracket 115 away from the carrier 220. Since the first engaging structure 114 is formed on the base 1114, and the base 1114 and the shell sleeve 1112 are separately provided, when the mounting bracket 112 is separated from the base 1114, the mounting bracket 112 can be disassembled from the side of the assembly opening. During assembly, the mounting bracket 112 and the base 1114 can also be inserted into the accommodating cavity 113 from the side of the assembly opening after the first engaging structure 114 is engaged with the second engaging structure 115, and the atomization assembly 200 can be connected to the mounting bracket 112 from the side of the mounting opening 117.

In the embodiment, a first limiting platform 222 is formed on the outer wall of the carrier 220, and the end surface of the shell sleeve 1112 forming the mounting opening 117 can abut against the first limiting platform 222. A second limiting platform 1116 is formed on the outer wall of the base 1114, and the end surface of the shell sleeve 1112 forming the assembly opening abuts against the second limiting platform 1116. Since the shell sleeve 1112 and the base 1114 are separate elements, when the mounting bracket 112 is engaged with the base 114 and the carrier 220, respectively, the shell sleeve 1112 can be clamped between the first limiting platform 222 and the second limiting platform 1116 by the first limiting platform 222 and the second limiting platform 1116.

Referring to FIGS. 1 to 3, in the embodiment, when the electronic atomization device 10 needs to be disassembled for recycling, the disassembly tool is inserted into the disassembly hole 116 from the side of the base 1114 of the housing 111, and the second hook 1152 of the resiliently deformable second engaging structure 115 is pulled or pressed by the disassembly tool to deform the second connecting portion 1151 and drive the second hook 1152 away from the first engaging structure 114. At this time, the base 1114 can be removed relative to the shell sleeve 1112 from the axial direction of the housing 111, and the second limiting platform 1116 on the base 1114 simultaneously releases the abutment against the shell sleeve 1112, so that the shell sleeve 1112 can be removed from the shell from the axial direction of 111 of the housing 111.

At this time, the battery cell 120 and the controller 130 are exposed, and the connecting position of the first matching structure 221 and the second matching structure 1123 is no longer wrapped by the shell sleeve 1112. Since the first matching structure 221 is a slot, the second matching structure 1123 is pushed through the slot to release the engagement, so as to remove the carrier 220 from the mounting bracket 112 from the axial direction of the housing 111. Then, the controller 130 and the battery cell 120 are disassembled from the side of the mounting bracket 112 to complete the disassembly of the battery assembly 100 and the atomization assembly 200. Referring to FIG. 1 and FIG. 2, in an embodiment, the battery assembly 100 further includes connection electrodes connected to the controller 130, and the heating element 210 can be electrically connected to the connection electrodes. In the embodiment, the connection electrodes are located on the side of the mounting bracket 112 facing the mounting opening 117, so as to facilitate the electrical connection between the heating element 210 and the connection electrodes.

In an embodiment, the battery assembly 100 further includes an air inlet element, the side wall of the housing 111 is provided with an air inlet hole, and the air inlet element is provided on the mounting bracket 112 and connected to the carrier 220, so that an air inlet channel in the air inlet element is in communication with the air inlet hole and the atomization cavity of the carrier 220. In an embodiment, the atomization assembly 200 further includes an inhaling nozzle 230, which is detachably provided on the side of the carrier 220 opposite to the housing 111. The inhaling nozzle 230 is provided with an inhaling channel 232 in communication with the atomization cavity, so as to facilitate the atomization medium to be discharged through the inhaling channel 232 after being atomized. In other embodiments, the inhaling nozzle 230 can also be integrally formed with the carrier 220.

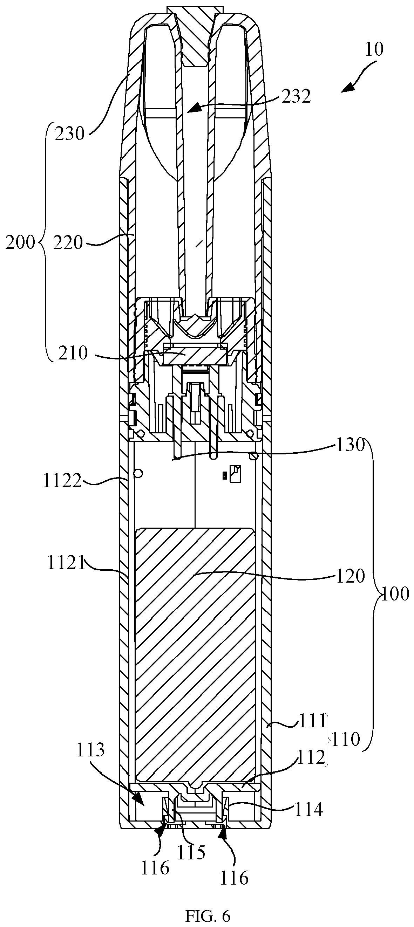

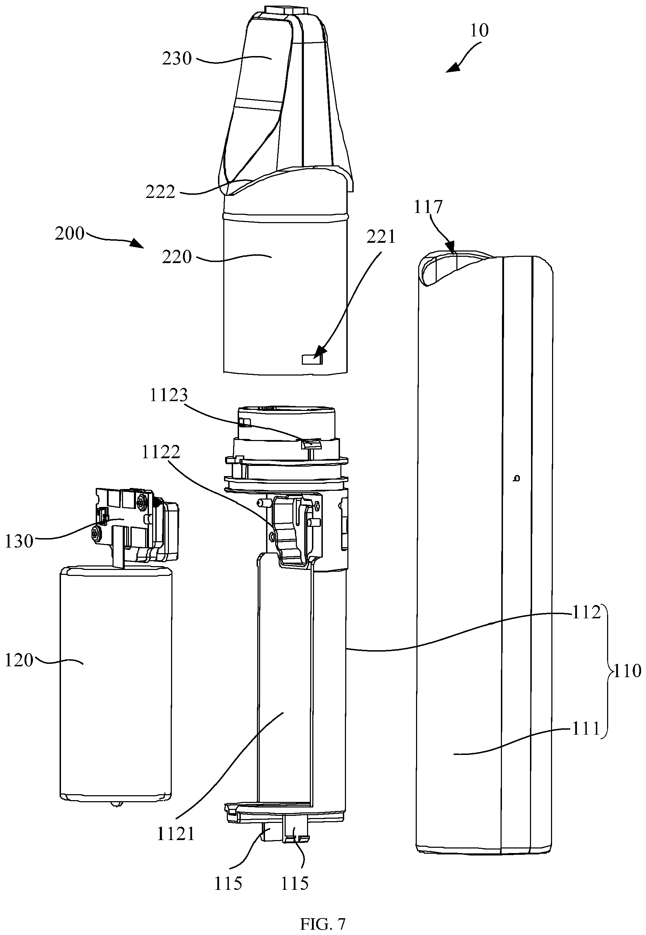

Referring to FIG. 6 and FIG. 7, an electronic atomization device 10 in another embodiment is configured to atomize an atomization medium, and can be disassembled to facilitate replacement and maintenance or recycling.

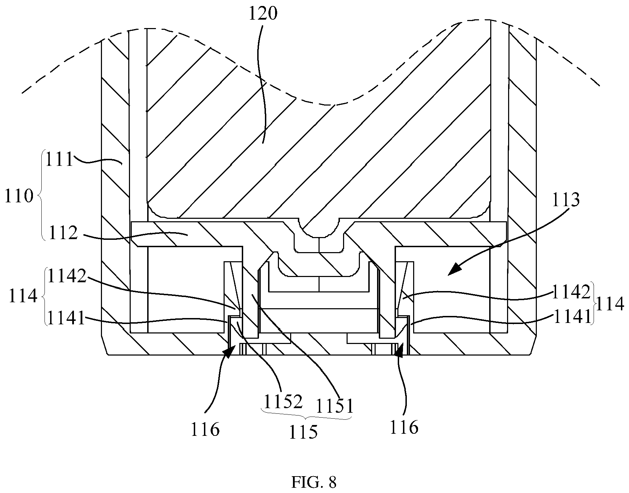

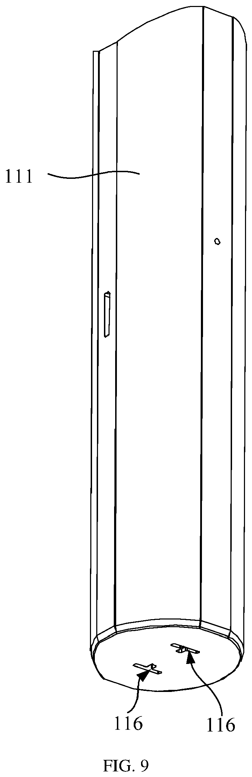

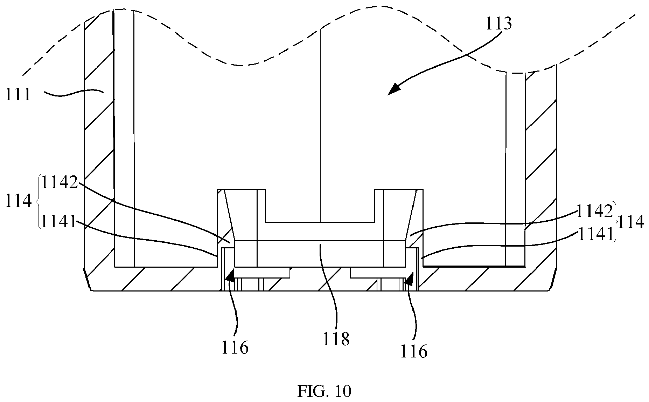

Referring to FIG. 6 to FIG. 10, the difference between the electronic atomization device 10 in the embodiment and the electronic atomization device 10 shown in FIG. 1 to FIG. 5 lies in that:
In the embodiment shown in FIG. 6 to FIG. 10, the housing 111 is of an integrated structure. In other words, the housing 111 shown in FIG. 6 to FIG. 10 is integrally formed by the shell sleeve 1112 and the base 1114 in the electronic atomization device 10 shown in FIGS. 1 to 5. In the embodiment shown in FIGS. 6 to 10, when the second engaging structure 115 provided on the mounting bracket 112 is engaged with the first engaging structure 114, the mounting connection between the mounting bracket 112 and the housing 111 can be achieved. In the embodiment shown in FIGS. 6 to 10, the structure of the housing 111 is simpler, thereby ensuring better structural stability of the housing 111 and avoiding a connection gap caused by the arrangement of the shell sleeve 1112 and the base 1114.

In the embodiments shown in FIGS. 1 to 5, the housing 111 includes a shell sleeve 1112 and a base 1114. Since the first engaging structure 114 is formed on the base 1114, the processing of the base 1114 and the first engaging structure 114 is facilitated and the processing difficulty is reduced.

According to the electronic atomization device 10, by providing the disassembly hole 116, the first engaging structure 114 and the second engaging structure 115 located in the accommodating cavity 113 can be dissembled. The disassembly structure is simple and the disassembly process is convenient. The mounting manner of the first engaging structure 114 and the second engaging structure 115 can also improve the mounting efficiency of the mounting bracket 112 and the housing 111.

In addition, the carrier 220 is detachably connected to the mounting bracket 112, thus the disassembly of the housing 111 and the mounting bracket 112 can facilitate the disassembly of the carrier 220 and the mounting bracket 112. Since the controller 130 and the battery cells 120 are detachably provided on the same side of the mounting bracket 112, it is convenient to remove the controller 130 and the battery cells 120 simultaneously from one side of the mounting bracket 112.

The disassembly process of the electronic atomization device 10 is simple, and the corresponding assembly process is simple, which is conducive to improving the assembly efficiency and disassembly and recycling efficiency of the electronic atomization device 10.

## Claims

1. A battery assembly (100), comprising:
a housing (111) provided with an accommodating cavity (113), wherein the inner wall of the housing (111) is provided with a first engaging structure (114), the outer wall of the housing (111) is provided with a disassembly hole (116) in communication with the accommodating cavity (113);
a mounting bracket (112) provided with a second engaging structure (115), wherein the second engaging structure (115) is configured to be engaged with the first engaging structure (114); and
a battery cell (120) mounted on the mounting bracket (112) and accommodated in the accommodating cavity (113);
wherein the disassembly hole (116) faces engagement position between the first engaging structure (114) or the second engaging structure (115), and at least one of the first engaging structure (114) and the second engaging structure (115) is resiliently deformable to be disengaged from each other.

2. The battery assembly (100) according to claim 1, wherein the first engaging structure (114) comprises a first connecting portion (1141) and a first hook (1142) connected to the first connecting portion (1141), the first connecting portion (1141) is connected to the inner wall of the housing (111), the second engaging structure (115) comprises a second connecting portion (1151) and a second hook (1152) connected to the second connecting portion (1151), the second hook (1152) is configured to be engaged with the first hook (1142), and at least one of the first connecting portion (1141) and the second connecting portion (1151) is resiliently deformable.

3. The battery assembly (100) according to claim 2, wherein the second connecting portion (1151) is integrally formed on the mounting bracket (112).

4. The battery assembly (100) according to claim 1 or 2, wherein the extension direction of the first engaging structure (114) is parallel to the axial direction of the housing (111), and the extension direction of the second engaging structure (115) is parallel to the axial direction of the housing (111).

5. The battery assembly (100) according to claim 1 or 2, wherein the housing (111) comprises a shell sleeve (1112) and a base (1114), the first engaging structure (114) is provided on the shell sleeve (1112) or the base (1114), and the base (1114) is detachable with respect to the shell sleeve (1112).

6. The battery assembly (100) according to claim 5, wherein the housing (111) comprises a first end and a second end opposite to the first end, and the mounting bracket (112) and the battery cell (120) are capable of being pushed out from the first end or the second end.

7. An electronic atomization device (10), comprising:
the battery assembly (100) according to any one of claims 1 to 6; and
an atomization assembly (200) accommodated on the housing (111), wherein the battery cell (120) is configured to supply power to the atomization assembly (200).

8. The electronic atomization device (10) according to claim 7, wherein the atomization assembly (200) comprises a heating element (210) and a carrier (220), the carrier (220) defines an atomization cavity, the heating element (210) is accommodated in the atomization cavity, the carrier (220) is provided on the housing (111) and is detachably connected to the mounting bracket (112), and the heating element (210) is electrically connected to the battery cell (120).

9. The electronic atomization device (10) according to claim 8, wherein the carrier (220) is provided with a first matching structure (221), the mounting bracket (112) is provided with a second matching structure (1123), an end of the housing (111) is provided with a mounting opening (117) in communication with the accommodating cavity (113), an end of the carrier (220) extends into the accommodating cavity (113) through the mounting opening (117) to enable the first matching structure (221) to be detachably connected to the second matching structure (1123).

10. The electronic atomization device (10) according to claim 9, wherein the first engaging structure (114) is provided on the bottom wall of the housing (111) opposite to the mounting opening (117) or on the side wall of the housing (111) adjacent to the bottom wall, the disassembly hole (116) is provided on the bottom wall of the housing (111) or on the side wall of the housing (111) adjacent to the bottom wall, and the second engaging structure (115) is provided on the bottom wall or the side wall of the mounting bracket (112) away from the carrier (220).

11. The electronic atomization device (10) according to claim 9, wherein the extension direction of the first engaging structure (114) coincides with the axial direction of the mounting opening (117), the extension direction of the second engaging structure (115) relative to the mounting bracket (112) coincides with the axial direction of the mounting opening (117).

12. The electronic atomization device (10) according to claim 9, wherein the housing (111) comprises a shell sleeve (1112) and a base (1114), opposite ends of the shell sleeve (1112) are provided with the mounting opening (117) and an assembly opening, respectively, the base (1114) is covered on the assembly opening, the first engaging structure (114) is provided on the base (1114), the disassembly hole (116) is provided on the base (1114), and the second engaging structure (115) is provided on a side of the mounting bracket (112) away from the carrier (220).

13. The electronic atomization device (10) according to claim 12, wherein a first limiting platform (222) is formed on the outer wall of the carrier (220), the end surface of the shell sleeve (1112) forming the mounting opening (117) abuts against the first limiting platform (222), a second limiting platform (1116) is formed on the outer wall of the base (1114), and the end surface of the shell sleeve (1112) forming the assembly opening abuts against the second limiting platform (1116).
